# EUROPEAN PATENT SPECIFICATION

(11) **EP 0 492 289 B1**
(45) Date of publication and mention of the grant of the patent: **27.11.1996**
(21) Application number: 91121281.9
(22) Date of filing: 11.12.1991
(51) Int. Cl.: E05B 65/20, E05C 9/20

(54) **Device for adjusting the length of a rod particularly for operating vehicle locks**
Einrichtung für das Justieren der Länge einer Stange, insbesondere eine Stange für die Operation eines Fahrzeugschlosses
Dispositif pour régler la longueur d'une tige, notamment une tige pour l'opération d'un serrure de véhicule

(30) Priority: 28.12.1990 IT 6807390
(43) Date of publication of application: 01.07.1992
(73) Proprietor: FIAT AUTO S.p.A., 10135 Torino (IT)
(72) Inventor: Ferrero, Giuseppe, I-12062 Cherasco (IT)
(74) Representative: Cerbaro, Elena

(56) References cited:
- FR-A- 2 589 533
- FR-A- 2 600 127
- GB-A- 2 166 211

## Description

The present invention relates to a device for adjusting the length of a rod, in particular of a rod for operating vehicle locks.

It is known that in operating systems for vehicle locks it is necessary to be able to adjust the length of the remote control rods attaching the lock to the handles and operating levers thereof, since the relatively large working tolerances in the body assembly stage can result in the distances between the points of attachment of the rods and the actuating points varying significantly among vehicles of the same type.

A first solution to this problem consists of using a rod longer than required by the application, mounting it between the lock and the actuating points and then bending it in a S with an appropriate tool to fit the length required in the specific application.

A second solution consists of using rods made in two sections, both having threads on corresponding opposite ends, which are joined by screwing the threaded ends into threaded seats in a junction block. In use, by adjusting the degree to which the ends of the rod sections are screwed into the block, one can regulate the overall length of the rod/block assembly and if necessary prevent the threaded ends from coming loose accidentally, for example by tightening locknuts previously screwed on the said ends against the block.

The solutions described are not yet free from inconveniences. In particular, the first is rather rudimentary and does not allow precise adjustments to be made, while the second requires costly work to be executed (tapping) and requires long assembly times. Neither solution, therefore, can be carried out easily by the operator employed on assembly.

An aim of the invention is to produce a device for adjusting the length of a rod, which allows precise and quick adjustment of the length of the rod and which can be produced and assembled at low cost.

The aforementioned aim is achieved by the invention, which relates to a device for adjusting the length of a rod, in particular of a rod for operating vehicle locks, in which the rod is divided into two sections that can be attached to each other end to end, characterised by the fact that it comprises a first and a second prismatic block which are respectively fixed integrally to corresponding opposite adjacent ends of said two rod sections with their axes of symmetry lying parallel to the respective rod sections, the first block being provided transversally to its axis of simmetry, on an external lateral surface thereof, with a first dentation, and the second block being provided internally with a seat capable of receiving the first block and open without a solution of continuity on a lateral face and on a front adjacent face of the second block so that the second block is capable of coupling with the first block by lateral insertion at said first block into the seat; the latter being provided internally with a second dentation, conjugate with the dentation of the first block and capable of enabling the first block to be axially locked in the seat of the second one in many different axial positions; the device further comprising an annular locking element slidably fitted on the exterior of the second block and capable of locking the said seat laterally when it is brought into correspondence therewith to laterally secure the first block therein.

For a better understanding of the invention, a non-limitative description is now given of one embodiment thereof, with reference to the appended drawings, in which:
figure 1 illustrates an adjustment device according to the invention in an uncoupled position;
figure 2 is a cross section on an enlarged scale of a detail of the device of figure 1;
figure 3 illustrates a view of the adjustment device in a coupled configuration; and
figure 4 illustrates on an enlarged scale and in longitudinal section a detail of figure 3.

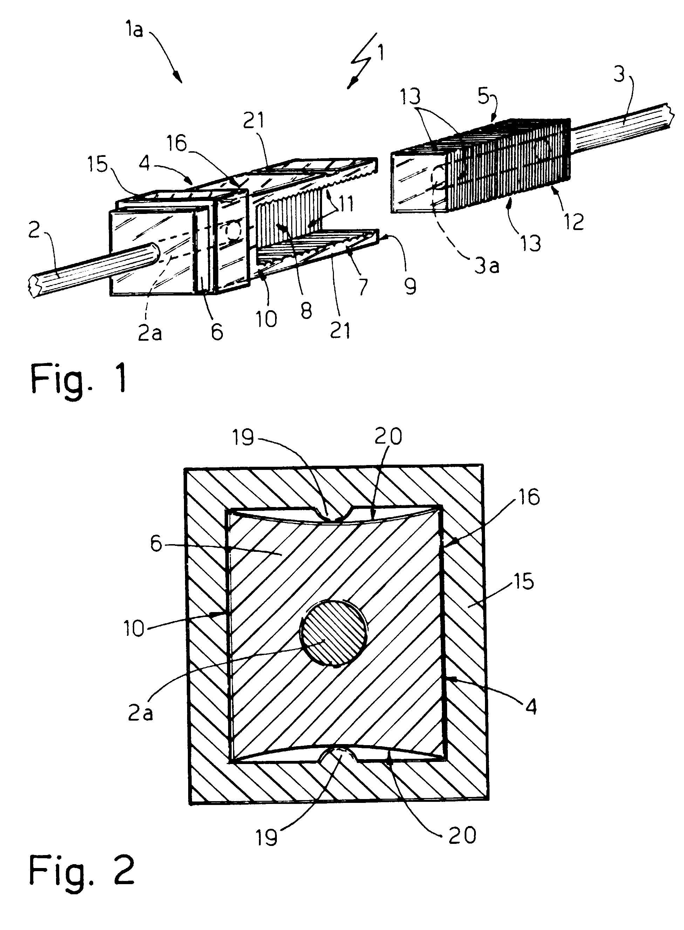

With reference to figures 1 to 4, there is indicated by 1 a device for adjusting the length of a rod la comprising the said device 1 and two sections 2 and 3 joined together end to end by device 1. The device 1 comprises two prismatic blocks 4 and 5, in the example illustrated having the shape of a parallelepipedon, which are respectively fixed integrally to corresponding opposite adjacent ends 2a and 3a of sections 2,3 with the axis of symmetry thereof orientated parallel to said sections 2,3: preferably, prismatic blocks 4,5 are made of a synthetic plastic material pressed directly on to ends 2a,3a of rod sections 2,3.

According to the invention, block 4 comprises a solid portion 6 in which the end 2a of rod section 2 is embedded (figure 2) and a hollow portion 7 in which a seat 8 in the shape of a parallelepipedon is obtained as a frontal-lateral slot and therefore open both on a front face 9 of block 4 opposite section 2 and on an adjacent lateral face 10 of block 4, parallel with section 2. Internally, seat 8 is provided with a dentation or serration 11 orientated transversally to the axis of extension of rod section 2 and extending along the whole internal lateral surface of seat 8. In particular, dentation 11 is of a known so-called "multiple line" type easily obtainable by pressing plastic material.

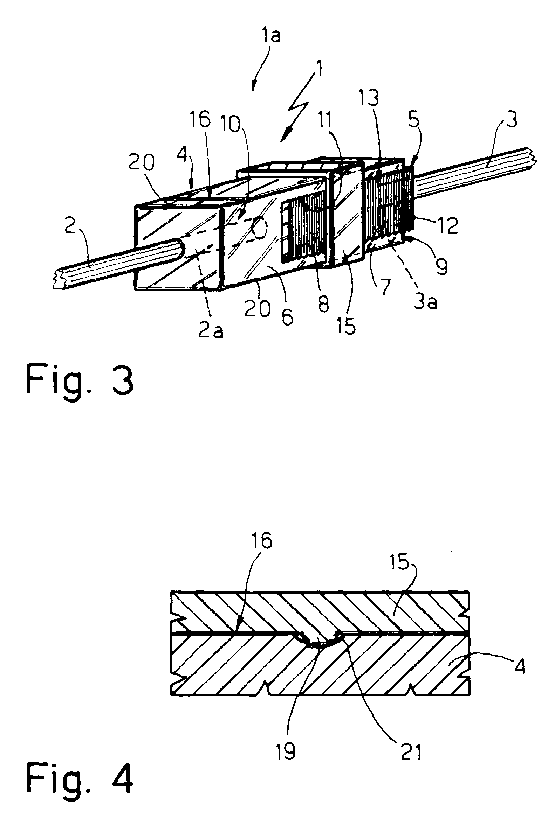

Block 5 is smaller than block 4 and in particular is shaped so as to be capable of coupling with seat 8 by lateral insertion therein from face 10. In particular, parallelepiped block 5 has end 3a of rod section 3 embedded within it and, along its whole external lateral surface 12 is provided transversally to the axis of section 3 with a dentation or serration 13 conjugate with that of 11, for example also of the "multiple line" type. The lateral coupling of block 5 in seat 8 of block 4 involves the coupling of the dentations 11,13, with consequent axial locking of block 5 within seat 8 and consequent integral axial attachment between blocks 4,5 and, finally, between sections 2,3 with reconstitution of the rod 1a (figure 3).

According to the invention, the axial length of seat 8 and of the relative hollow portion 7 is preset during design and is equal to the quantity required to ensure the secure and stable attachment between the dentations 11,13, in such a manner as to ensure the rigidity of rod 1a, plus a quantity equal to the maximum admissable variation in length of the rod required to compensate for any relative positioning errors between the points of rod 1a which must be attached together.

In this manner, dentations 11,13 are capable of enabling block 5 to be inserted in seat 8 in many different axial positions, and to be selectively locked axially therein in any of these different axial positions. Consequently, on face 9, block 5 can be made to project to a greater or lesser degree from seat 8 thus adjusting the total axial length of rod 1a.

In order to ensure that block 5 is locked completely in seat 8, the device 1 further comprises a prismatic annular element 15 which is mounted coaxial to block 4, sliding axially over an external lateral surface 16 thereof. This annular element 15 for example can be selectively moved between two different axial positions, illustrated in figures 1 and 3. In the position of figure 1, inoperative, it is positioned in correspondence with solid portion 6 of block 4 and leaves seat 8 totally free. With the annular element 15 in this position, it is possible to insert block 5 into seat 8 by positioning it first alongside block 4, on face 10, in a desired axial position and then inserting block 5 sideways into seat 8 by a movement perpendicular to the axes of sections 2,3.

In the position of figure 3, the operative position, the annular element or band 15 is vice versa positioned in correspondence with hollow portion 7 wherein seat 8 is obtained and therefore closes it, at least in part, laterally on face 10 thus preventing block 5 from coming out of seat 8. Given that block 5 is now axially locked by the coupling of dentations 11,13 and that the band or annular element 15, once in position over portion 7, also acts as an element of circumferential containment preventing any elastic deformation of portion 7 which could cause dentations 11,13 to loose their grip, it is clear that in this operative position the annular element 15 completely secures block 5 in seat 8, and consequently a stable integral attachment is obtained between sections 2,3.

The annular element 15 is secured in the said two positions by a snap catch, for example by obtaining on an internal surface 18 of annular element 15 respective semispherical opposite projections 19 capable in use of being engaged by snap action (due to the elasticity of element 15 as a whole, which is also obtained by pressing a synthetic plastic material), respectively a first pair of opposite transversal grooves 20 obtained on the external surface 16 of the adjustment block 4 in correspondence with solid portion 12, and a second pair of opposite transversal grooves 21 obtained again on surface 16 but in correspondence with hollow portion 7 provided with seat 8. In order to facilitate the use of the studs or semispherical projections 19, the grooves 20,21 are preferably crescent shaped in transversal section as illustrated in figure 2.

From what has been described the advantages connected with the invention are evident. The subdivision of the rod into two sections 2,3 enables them to be connected quickly and easily to the points of attachment on the lock and on the remote control rods. Adjustment is made upon assembly by inserting block 5 at an appropriate axial position in seat 8, laterally on face 10, thus engaging dentations 11 and 13 at an appropriate position: the latter, being "multiple line" couplings, provide very fine and precise adjustment of the length of the rod, without otherwise requiring complex assembly as in the case of threads. Locking is obtained in a very rapid manner, simply by moving element 15 from the position of figure 1 to that of figure 3. If the rod must be dismantled for maintenance, this operation can also be carried out quickly by simply inverting the sequence described above.

## Claims

1. A device for adjusting the length of a rod, in particular of a rod for operating vehicle locks, in which the rod is subdivided into two sections (2, 3) which can be attached to each other end to end, characterised by the fact that it comprises a first and second prismatic block (4, 5) which are respectively fixed integrally to corresponding opposite adjacent ends of said two rod sections (2, 3) with their axes of symmetry orientated parallel to the respective rod sections, the first block (5) being provided transversally to its axis of simmetry, on an external lateral surface thereof, with a first dentation (13), and the second block (4) being provided internally with a seat (8) capable of receiving the first block (5) and open without solution of continuity on a lateral face and on a front adjacent face of the second block (4) so that the second block is capable of coupling with the first block (5) by lateral insertion of said first block into the seat (8); the latter being provided internally with a second dentation (11) conjugate with the dentation (13) of the first block and capable of enabling the first block to be locked axially in the seat (8) of the second one (4) in many different axial positions; the device further comprising an annular locking element (15) fitted slidably on the exterior of the second block (4) and capable of locking the said seat (8) laterally when it is brought into correspondence therewith to laterally secure the first block (5) therein.

2. A device according to claim 1, characterised by the fact that said first and second block (4, 5) and said annular element (15) are made from a synthetic plastic material said blocks being parallelepiped in shape, as also said seat (8) is, and being pressed directly over opposite adjacent ends of said rod sections (2, 3), which are thus embedded within said blocks.

3. A device according to claim 1 or 2, characterised by the fact that the axial length of said seat (8) is equal to the length required to ensure a stable attachment between said dentations (11, 13), plus an amount equal to the maximum admissable variation in length of said rod required to compensate for errors in relative positioning between the points of said rod to be joined.

4. A device according to any of the foregoing claims, characterised by the fact that said sliding annular element (15) can be moved between two different axial positions at which it can be fixed selectively by snap action by means of respective opposite semispherical projections (19) obtained on one of said second block (4) and annular element (15) and capable of engaging a corresponding pair of opposite grooves (20) obtained transversally on the other one of said second block and sliding annular element.

## Patentansprüche

1. Einrichtung für das Justieren der Länge einer Stange, insbesondere einer Stange für die Operation eines Fahrzeugschlosses, bei der die Stange in zwei Abschnitte (2, 3) unterteilt ist, die endseitig miteinander verbunden werden können, dadurch gekennzeichnet, daß sie einen ersten und zweiten prismatischen Block (4, 5) aufweist, die jeweils einstückig an den zugehörigen, einander angrenzenden Enden der beiden Stangenabschnitte und mit ihren Symmetrieachsen parallel zu den jeweiligen Stangenenden befestigt sind, wobei der erste Block (5) auf einer äußeren Seitenfläche quer zu seiner Symmetrieachse mit einer ersten Auszahnung (13) versehen ist und der zweite Block (4) innen mit einem Sitz (8) versehen ist, der in der Lage ist, den ersten Block (5) aufzunehmen, und der auf einer Seitenfläche und einer dem zweiten Block (4) benachbarten Vorderfläche ununterbrochen offen ist, so daß der zweite Block (4) mit dem ersten Block (5) durch seitliches Einsetzen in den Sitz (8) des ersten Blocks (5) gekoppelt werden kann, und letzterer (der Sitz) innen mit einer zweiten Auszahnung (11) versehen ist, die in die Auszahnung (13) des ersten Blocks eingreift und es ermöglicht, daß der erste Block axial im Sitz (8) des zweiten (4) in vielen verschiedenen Positionen festgelegt werden kann, wobei die Einrichtung außerdem ein ringförmiges Sperrelement (15) aufweist, das verschiebbar auf der Außenseite des zweiten Blocks (4) befestigt ist und es ermöglicht, besagten Sitz (8) seitlich zu schließen, wenn es damit in Eingriff gebracht wird, um den ersten Block (5) darin seitlich zu sichern.

2. Einrichtung nach Anspruch 1, dadurch gekennzeichnet, daß der erste und zweite Block (4, 5) sowie das besagte ringförmige Element (15) aus einem synthetischen Kunststoffmaterial hergestellt sind, daß besagte Blöcke wie auch der Sitz (8) die Form eines Parallelepipedons haben und direkt auf die einander gegenüberliegenden, benachbarten Enden der Stangenabschnitte (2, 3) aufgepreßt sind, die dadurch in den Blöcken eingebettet sind.

3. Einrichtung nach Anspruch 1 oder 2, dadurch gekennzeichnet, daß die axiale Länge des Sitzes (8) gleich der Länge ist, die benötigt wird, um eine stabile Verbindung zwischen den Auszahnungen (11, 13) zu erreichen, und zusätzlich einen Betrag aufweist, der gleich der maximalen zulässigen Streuung der Länge der Stange ist, die benötigt wird, um Fehler der relativen Lage zwischen den Punkten der Stangen, die miteinander zu verbinden sind, auszugleichen.

4. Einrichtung nach einem der vorhergehenden Ansprüche, dadurch gekennzeichnet, daß das verschiebbare ringförmige Element (15) zwischen zwei unterschiedlichen axialen Positionen bewegt werden kann, in denen es durch Einrasten mittels gegenüberliegender halbkreisförmiger Vorsprünge (19) wahlweise festlegbar ist, die entweder an dem zweiten Block (4) oder an dem ringförmigen Element (15) vorgesehen sind und in ein Paar entsprechender Ausnehmungen (20) eingreifen können, die entweder auf dem verschiebbaren ringförmigen Element oder dem zweiten Block quer verlaufen.

## Revendications

1. Dispositif de réglage de la longueur d'une tige, en particulier d'une tige pour commander des serrures de véhicule, dans lequel la tige est subdivisée en deux parties (2,3) qui peuvent être attachées l'une à l'autre bout à bout, caractérisé en ce qu'il comprend un premier et un deuxième blocs prismatiques (4,5) qui sont respectivement fixés solidairement à des extrémités adjacentes opposées correspondantes des dites deux parties de tige (2,3) avec leurs axes de symétrie orientés parallèlement aux parties de tige respectives, le premier bloc (5) comportant, formée transversalement à son axe de symétrie sur sa surface latérale extérieure, une première denture (13) et le deuxième bloc (4) comportant un siège (8) qui peut recevoir le premier bloc (5) et qui s'ouvre sans solution de continuité sur une face latérale et sur une face adjacente frontale du deuxième bloc (4) de sorte que le deuxième bloc peut s'accoupler au premier bloc (5) par insertion latérale dudit premier bloc dans le siège (8), ledit siège comportant intérieurement une deuxième denture (11) complémentaire de la denture (13) du premier bloc et permettant de bloquer axialement le premier bloc dans le siège (8) du deuxième bloc (4) dans de nombreuses positions axiales différentes : le dispositif comprenant en outre un élément de verrouillage annulaire (15) ajusté de façon coulissante sur l'extérieur du deuxième bloc (4) et pouvant bloquer ledit siège (8) latéralement lorsque le dit élément est amené en correspondance du siège afin de retenir latéralement le premier bloc (5) dans le siège.

2. Dispositif suivant la revendication 1, caractérisé en ce que lesdits premier et deuxième blocs (4,5) et ledit élément annulaire (15) sont fabriqués en une matière plastique synthétique, lesdits blocs étant en forme de parallélépipède, ainsi que ledit siège (8), et étant pressés directement sur des extrémités adjacentes opposées desdites parties de tige (2,3), qui sont ainsi encastrées dans lesdits blocs.

3. Dispositif suivant la revendication 1 ou 2, caractérisé en ce que la longueur axiale dudit siège (8) est égale à la longueur requise pour assurer un accouplement stable entre lesdites dentures (11,13) plus une quantité égale à la variation maximale admissible de longueur de ladite tige nécessaire pour compenser les erreurs de positionnement relatif entre les points de ladite tige à relier.

4. Dispositif suivant une quelconque des revendications précédentes, caractérisé en ce que ledit élément annulaire coulissant (15) peut être déplacé entre deux positions axiales différentes, auxquelles il peut être fixé sélectivement par enclenchement élastique au moyen de deux saillies hémisphériques opposées respectives (19) formées sur l'un dudit deuxième bloc (4) et dudit élément annulaire (15) et pouvant s'engager dans une paire correspondante de rainures opposées (20) formées transversalement sur l'autre audit deuxième bloc et dudit élément annulaire coulissant.
